# EUROPEAN PATENT SPECIFICATION

(11) **EP 0 729 398 B1**
(45) Date of publication and mention of the grant of the patent: **25.02.1998**
(21) Application number: 95900867.3
(22) Date of filing: 17.11.1994
(51) Int. Cl.: B23K 35/00, B23K 35/30, B23K 20/233, C22C 5/08

(54) **A METHOD FOR JOINING MATERIALS TOGETHER BY A DIFFUSION PROCESS USING SILVER/GERMANIUM ALLOYS AND A SILVER/GERMANIUM ALLOY FOR USE IN THE METHOD**
DIFFUSIONSVERBINDEN VON WERKSTOFFEN MITTELS SILBER-GERMANIUM-LEGIERUNGEN UND SILBER-GERMANIUM-LEGIERUNG ZUM VERWENDEN IN DIESEM VERFAHREN
PROCEDE DE SOUDURE DE MATERIAUX PAR DIFFUSION A L'AIDE D'ALLIAGES D'ARGENT/GERMANIUM ET ALLIAGE UTILISE DANS CE PROCEDE

(30) Priority: 18.11.1993 GB 9323787
(43) Date of publication of application: 04.09.1996
(73) Proprietor: Johns, Peter Gamon, Watford, Herts. WD1 3BQ (GB)
(72) Inventor: Johns, Peter Gamon, Watford, Herts. WD1 3BQ (GB)
(74) Representative: Meddle, Alan Leonard
(86) International application number: GB9402526
(87) International publication number: WO9513900

(56) References cited:
- EP-A- 0 067 983
- DE-C- 508 528
- GB-A- 2 255 348
- US-A- 4 124 380
- WELDING JOURNAL., vol.41, no.4, April 1962, MIAMI US pages 160S - 166S J.A. HOFFMAN ET AL 'Diffusion Bonding Beryllium Copper for Ultra High-Strenght Joints'
- CHEMICAL ABSTRACTS, vol. 112, no. 10, 5 March 1990, Columbus, Ohio, US; abstract no. 89488, LYUBESHKIN, V. V. ET AL 'Solder for soldering electronic components' & SU,A,1 505 729 (LYUBESHKIN, V. V.;PRIBYLOV, YU. I.; PODVIGINA, O. P.; SUKHAREVA, M. G.)

## Description

The present invention relates to a method of joining metals together by a diffusion process using silver/germanium alloy and to a silver/germanium alloy composition which is particularly suitable for use in the method of the invention. More particularly, the present invention relates to such a method using a copper/silver/germanium alloy which does not require the introduction of an additional filler material.

Conventionally, metals are joined by three principle methods: welding, brazing and soldering. When welding using a filler, a filler material is chosen which has a composition which is similar to the two parts being joined and the actual contact regions of the adjacent metal parts are melted to effect the join. When resistance welding or laser welding, e.g. spot welding, the adjacent metal parts to be joined are raised to a high temperature and melted, no filler metal being required to effect the join. When brazing or soldering, a filler metal is used which has an appreciably lower melting point than that of the two parts being joined such that the contact regions of the metal parts being joined are not melted. Typically, solders melt below about 450°C whereas brazing uses filler metals of greater strength which have a melting temperature of greater than 450°C. These methods all require either the use of a filler metal which forms a liquid phase upon heating to facilitate the joining of the parts or the melting of the adjacent metal parts to be joined. The filler metal or the melted parts of the metals to be joined then cools and solidifies thereby creating a bond at the molecular level.

Silver and silver alloys have conventionally been joined using a brazing process. However, so-called "fire staining" occurs at the high temperatures required to effect a bond using brazing techniques.

Because of its high thermal and electrical conductivity silver and silver based alloys are well known for their use in electrical and electronic contacts. Silver is also a precious metal and is used in the manufacture of jewellery and silverware. Accordingly, it becomes necessary to create bonds between both silver and silver alloys and other metals whether they are ferrous or non-ferrous. It is also desirable to bond ceramics or plastics to metals. This has largely been done in the past by tack welding, soldering or brazing the joints together which introduces impurities from the fluxing agent or solder into the silver/silver alloy.

A fire stain or fire spot is caused by the oxidation of the copper at high temperatures. Additionally, it is well known that silver tarnishes easily. This is because the silver, which does not readily oxidise at ambient temperatures, reacts with sulphur or hydrogen sulphide to cause the familiar tarnishing effect. It is known that the addition of a small quantity of germanium to a silver/copper alloy slows down the rate at which the silver reacts with sulphur and hydrogen sulphide thus reducing the tarnishing effect as well as reducing fire stain when the silver/copper/germanium alloy is heated to high temperatures at which the copper would normally oxidise.

It is possible to braze or flame anneal in air a silver/copper/germanium ternary alloy, without causing the production of fire stain and to provide a finished product which is less susceptible to tarnishing. However, a filler metal is required to perform the brazing to create a bond or joint and it is also necessary to raise the temperature of the silver alloy being worked to a high temperature, thus producing large temperature gradients in a bond area.

It is an object of the present invention to provide a method of joining metals without needing to provide an additional filler metal. It is another object of the present invention to provide a method of joining metals at temperatures below the solidus temperature of the constituent materials of the parts being joined. It is a further object of the invention to provide a silver/germanium alloy which is particularly suited to joining by the method of the invention or by non-filler welding techniques.

Accordingly, in one aspect, the present invention provides a method of joining two elements using a silver/germanium alloy comprising a silver content of at least 77% by weight and a germanium content of between 0.4 and 7% by weight, the remainder principally being copper apart from any impurities, which method comprises the steps of: providing two elements to be joined together, at least one of the elements comprising the silver/germanium alloy; placing the two elements adjacent one another such that a portion of a free surface of the alloy contacts a portion of a free surface of the other element without interposing a filler material between the two free surfaces; and heating the two free surfaces where the two elements are adjacent one another to a temperature below that of the solidus temperature of any one of the constitutent materials of the elements thereby joining the two elements by a diffusion process.

In another aspect, the present invention provides a silver/germanium alloy having a silver content of at least 77% by weight, a germanium content of between 0.4 and 7% by weight, the remainder being copper apart from any impurities, which alloy contains boron as a grain refiner at a concentration of less than 20 parts per million, wherein the alloy does not contain one or a mixture of 0.02 to 7% of zinc and silicon. International Patent Application No. WO95/14112 comprises relevant prior art for this composition, falling within the terms of Article 54 (3) EPC.

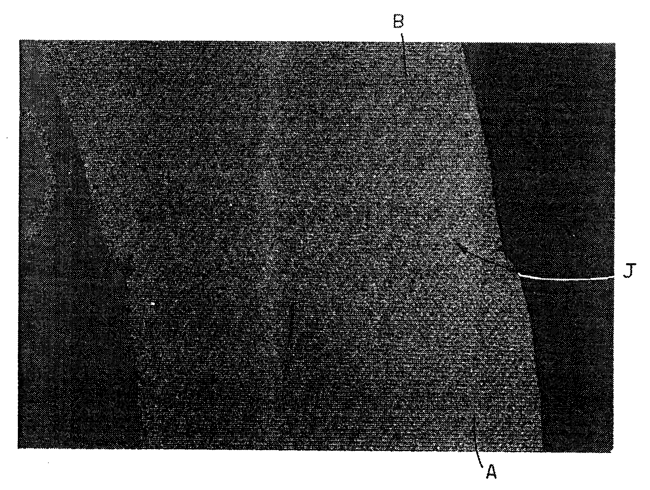

In order that the present invention may be more readily understood, it will now be described with reference to the accompanying figure, in which there is illustrated a cross-sectional representation through two metal parts A,B joined using a method according to the present invention.

Whilst it is known to be possible to braze a silver/copper/germanium alloy with less risk of fire staining the brazed areas, it has now been found that, surprisingly, it is in fact not necessary to braze such silver/copper/germanium alloy to produce a bond. Accordingly, in producing a joint using a method according to the present invention it is no longer necessary to melt the areas of the joint or a filler metal or, indeed, to provide a filler metal at all.

To produce such a joint or bond in accordance with one aspect of the present invention, the following steps are carried out.

The surfaces of the two pieces of material, one of which is a silver alloy containing copper and germanium, are prepared so that the surfaces to be joined (mating surfaces) do not have any large gaps between them such that the two mating surfaces are engaged over the largest possible surface area. The two pieces of material A,B (see the figure) are then placed adjacent one another so that the desired physical arrangement of the joint is achieved. With the pieces of material in this position, heat energy is then applied to the joint J (see figure) to cause diffusion between the adjacent mating surfaces. Heat energy is applied for a predetermined amount of time such that the temperature of the two pieces of material being joined does not exceed the solidus temperature of any one of the constituents of the two pieces of material. Accordingly, there is no melting of the two pieces of material being joined or bonded and no filler metal is required.

As can be seen from the accompanying figure, the grain structure of both materials A,B in the joint area is substantially unaffected and the join line J is only detectable with difficulty. Thus, such joins are aesthetically pleasing, which is beneficial in jewellery applications.

The ability to form a joint using a silver/copper/germanium alloy in accordance with the present invention is thought to be due to the diffusional motion of the atoms on the mating surfaces of the two pieces of material being joined and, in particular, the bulk diffusion of the germanium atoms into vacancies on the adjacent surface of the other piece of material. Such vacancies are common on the free surfaces of metals and it is therefore possible to join, for example, a metal part comprising a silver/copper/germanium alloy to either another silver/copper/germanium alloy or to a ferrous or non-ferrous metal without the introduction of an additional filler metal. Additionally as such vacancies may also be present in free surfaces of ceramics or other non-metallic materials such as plastics, it is also possible to join the silver/copper/germanium alloy to non-metallic materials.

All types of joint may be produced using the above described method such as butt or lap type joints.

In one embodiment of the invention the silver/copper/germanium alloy is applied as either a powder, plating or a thin coating to one of the elements to be joined. In this case the silver/copper/germanium alloy, in whatever form, bonds as a separate element to each of the two elements to be joined.

In accordance with the invention a silver/copper/germanium alloy powder may be bonded to another element as a means of providing a Silver/copper/germanium coating or plating.

It is also possible using the above described method to produce a multi-layer composite material formed by bonding the silver/copper/germanium alloy to layers of other material, such as other metals, ceramics or plastics as required.

The above described method can be carried out at temperatures as low as 500°C thereby obviating the need for expensive autoclave units or ovens. Joints have been achieved by maintaining the materials to be joined at this temperature for a period of minutes.

In one embodiment of the present invention the silver/germanium alloy comprises a silver content of at least 77% by weight and the germanium content comprises between 0.4 and 7% by weight, the remainder principally being copper apart from any impurities.

In a preferred embodiment of the present invention the silver/germanium alloy comprises a silver content of at least 92.5% by weight and the germanium content comprises between 0.5 and 3% by weight, the remainder principally being copper apart from any impurities.

A silver/germanium alloy which is particularly suitable for use in the method of the present invention, but which also lends itself to joining by resistance welding and laser welding techniques, comprises a silver content of at least 92.5% and a germanium content of between 0.4 and 7%, the remainder principally being copper apart from any impurities, which alloy contains boron as a grain refiner at a concentration of less than 20 parts per million. Thus, it has been found that, remarkably, such low concentrations of boron provide excellent grain refining in a silver/germanium alloy. Indeed, a concentration of less than 10 parts per million and as low as 2 or even 0.9 parts per million is effective for this purpose, imparting greater strength and ductility to the alloy compared with a silver/germanium alloy without a borun content and permitting strong and aesthetically pleasing joints to be obtained using a method embodying the invention or resistance and laser welding techniques.

The silver/germanium alloy of the present invention is resistant to fire stain and no surface pitting of samples was observed after repeated heating (three times) to temperatures of which the copper/germanium eutectic in known silver/copper/germanium alloys would normally melt and cause pitting.

The boron in a silver/germanium alloy embodying the invention appears to inhibit grain growth even at temperatures used for soldering in the jewellery trade.

Other preferred embodiments of the silver/germanium alloy according to the present invention comprise a silver content of at least 80% or at least 83%.

## Claims

1. A method of joining two elements using a silver/germanium alloy comprising a silver content of at least 77% by weight and a germanium content of between 0.4 and 7% by weight, the remainder principally being copper apart from any impurities, which method comprises the steps of: providing two elements to be joined together, at least one of the elements comprising the silver/germanium alloy; placing the two elements adjacent one another such that a portion of a free surface of the alloy contacts a portion of a free surface of the other element without interposing a filler material between the two free surfaces; and heating the two free surfaces where the two elements are adjacent one another to a temperature below that of the solidus temperature of any one of the constitutent materials of the elements thereby joining the two elements by a diffusion process.

2. A method according to Claim 1, wherein the germanium content comprises between 0.5 and 3% by weight.

3. A method according to Claim 1 or 2, wherein both elements to be joined comprise the silver/germanium alloy.

4. A method according to any preceding claim, wherein the two adjacent free surfaces of the elements are heated to as low as a temperature of 500°C.

5. A method according to any preceding claim, wherein the element comprising the silver/germanium alloy is a powder, plating or a thin coating.

6. A method according to any preceding claim when used in the manufacture of items of jewellery, silverware or electrical or electronic contacts, or aerospace materials.

7. A method according to any preceding claim, wherein a plurality of superimposed elements are joined together to create a multi-layered product.

8. A silver/germanium alloy having a silver content of at least 77% by weight, a germanium content of between 0.4 and 7% by weight, the remainder being copper apart from any impurities, which alloy contains boron as a grain refiner at a concentration of less than 20 parts per million, wherein the alloy does not contain one or a mixture of 0.02 to 7% of zinc and silicon.

9. An alloy according to Claim 8, wherein the germanium content comprises between 0.5 and 3% by weight.

10. An alloy according to Claim 8 or 9, wherein the boron content is less than 10 parts per million.

11. An alloy according to Claim 10, wherein the boron content is 0.9 parts per million.

## Patentansprüche

1. Ein Verfahren zum Verbinden zweier Elemente unter Verwendung einer Silber/Germanium-Legierung, die einen Silbergehalt von wenigstens 77 Gewichtsprozent und einen Germaniumgehalt zwischen 0,4 und 7 Gewichtsprozent enthält, wobei der Rest im wesentlichen - abgesehen von möglichen Verunreinigungen - Kupfer ist, wobei das Verfahren die folgenden Schritte aufweist: Bilden zweier miteinander verbindenden Elemente, wobei wenigstens eines dieser Element die Silber/Germanium-Legierung aufweist; Anordnen von zwei Elementen benachbart zueinander derart, daß ein Abschnitt der freien Fläche der Legierung einen Abschnitt der freien Fläche des anderen Elements ohne Einbringen eines Füllmaterials zwischen die beiden freien Flächen berührt; und Erwärmen der beiden freien Flächen dort, wo die beiden Elemente einander benachbart sind auf einer Temperatur unterhalb derjenigen der Verfestigungstemperatur der Ausgangsmaterialien der Elemente, wodurch die beiden Elemente durch einen Diffusionsvorgang miteinander verbunden werden.

2. Ein Verfahren nach Anspruch 1, wobei der Germaniumgehalt weniger als 0,5 bis 3 Gewichtsprozent beträgt.

3. Ein verfahren nach Anspruch 1 oder 2, wobei die beiden miteinander zu verbindenden Elemente die Silber/Germanium-Legierung aufweisen.

4. Ein Verfahren nach einem der vorangehenden Ansprüche, wobei die beiden einander benachbarten Flächen der Elemente auf eine Temperatur von nur 500°E erwärmt werden.

5. Ein Verfahren nach einem der vorangehenden Ansprüche, wobei das Element, das die Silber/Germanium-Legierung aufweist, ein Puder, eine Plattierung oder eine dünne Beschichtung ist.

6. Ein Verfahren nach einem der vorangehenden Ansprüche bei einer Verwendung bei der Herstellung von Juwelierprodukten, Silberwaren oder elektrischen oder elektronischen Kontakten oder Materialien für die Raumfahrt.

7. Ein Verfahren nach einem der vorangehenden Ansprüche, wobei eine Mehrzahl von einander überlagerten Elementen miteinander verbunden werden, um ein mehrschichtiges Produkt herzustellen.

8. Eine Silber/Germanium-Legierung mit einem Silbergehalt von wenigstens 77 Gewichtsprozent, einem Germaniumgehalt zwischen 0,4 und 7 Gewichtsprozent, Rest Kupfer abgesehen von möglichen Verunreinigungen, wobei die Legierung Bor als ein Körnungsverfeinerer in einer Konzentration von weniger als 20 Teilen pro Million aufweist, wobei die Legierung weder Zink oder Silizium oder eine Mischung von Zink oder Silizium von 0,02 bis 7 % aufweist.

9. Eine Legierung nach Anspruch 8, wobei der Germaniumgehalt zwischen 0,5 und 3 Gewichtsprozent beträgt.

10. Eine Legierung nach Anspruch 8 oder 9, wobei der Borgehalt geringer als 10 Teile pro Million ist.

11. Eine Legierung nach Anspruch 10, wobei der Borgehalt 0,9 Teile pro Million beträgt.

## Revendications

1. Un procédé de soudure de deux éléments utilisant un alliage argent/germanium comportant une teneur en argent d'au moins 77 % en poids et une teneur en germanium comprise entre 0,4 % et 7 % en poids, le reste étant principalement du cuivre indépendamment de toutes impuretés quelconques, lequel procédé comprend les étapes de : fournir deux éléments devant être soudés ensemble, au moins l'un des éléments comprenant un alliage d'argent/germanium ; placer les deux éléments adjacents l'un à l'autre, de telle sorte qu'une portion d'une surface libre de l'alliage entre en contact avec une portion d'une surface libre de l'autre élément sans interposition d'une matière de remplissage entre les deux surfaces libres ; et chauffer les deux surfaces libres où les deux éléments sont adjacents l'un à l'autre à une température inférieure à la température de solidification de l'une quelconque des matières constituantes des éléments, afin de souder ainsi les deux éléments par un procédé de diffusion.

2. Un procédé conforme à la Revendication 1, dans lequel la teneur en germanium est comprise entre 0,5 % et 3 % en poids.

3. Un procédé conforme à la Revendication 1 ou 2, dans lequel l'un et l'autre des éléments devant être soudés comportent un alliage argent/germanium.

4. Un procédé conforme à l'une quelconque revendication précédente, dans lequel les deux surfaces libres adjacentes des éléments sont chauffées à une température aussi faible que 500 °C.

5. Un procédé conforme à l'une quelconque revendication précédente, dans lequel l'élément comportant l'alliage en argent/germanium est une poudre, un placage ou un revêtement mince.

6. Un procédé conforme à l'une quelconque revendication précédente, utilisé dans la fabrication d'objets de joaillerie, d'argenterie, ou de contacts électriques ou électroniques, ou de matériaux destinés à l'industrie aérospatiale.

7. Un procédé conforme à l'une quelconque revendication précédente, dans lequel une pluralité d'éléments superposés sont soudés ensemble pour créer un produit multi-couche.

8. Un alliage en argent/germanium comportant une teneur en argent d'au moins 77 % en poids, une teneur en germanium comprise entre 0,4 % et 7 % en poids, le reste étant constitué par du cuivre indépendamment de toutes impuretés quelconques, lequel alliage contient du bore comme affineur de grains à une concentration inférieure à 20 parties par million, dans lequel l'alliage ne contient pas de zinc et de silicium ou un mélange de 0,02 % à 7 % de zinc et de silicium.

9. Un alliage conforme à la Revendication 8, dans lequel la teneur en germanium est comprise entre 0,5 % et 3 % en poids.

10. Un alliage conforme à la Revendication 8 ou 9, dans lequel la teneur en bore est inférieure à 10 parties par million.

11. Un alliage conforme à la Revendication 10, dans lequel la teneur en bore est de 0,9 par million.
